# EUROPÄISCHE PATENTSCHRIFT

(11) **EP 2 153 074 B1**
(45) Veröffentlichungstag und Bekanntmachung des Hinweises auf die Patenterteilung: **21.03.2012**
(21) Anmeldenummer: 08749339.1
(22) Anmeldetag: 06.05.2008
(51) Int. Cl.: F16C 17/04, F16C 17/08, F16C 17/10, F16C 33/10

(54) **Pumpe mit Anlaufscheibe**
Pump with stop disc
Pompe avec rondelle d'arrêt

(30) Priorität: 22.05.2007 DE 102007023630
(43) Veröffentlichungstag der Anmeldung: 17.02.2010
(73) Patentinhaber: ixetic Bad Homburg GmbH, 61352 Bad Homburg (DE)
(72) Erfinder: WEBERT, Dirk, 71364 Winnenden (DE); PRINZHORN, Karl, 61169 Friedberg (DE); RIPP, Jürgen, 55127 Mainz (DE)
(74) Vertreter: Gleiss, Alf-Olav
(86) Internationale Anmeldenummer: PCT/EP2008/003614
(87) Internationale Veröffentlichungsnummer: WO 2008/141726

(56) Entgegenhaltungen:
- DE-A1- 10 247 666
- DE-A1- 19 725 564
- US-A- 2 941 851
- US-A- 3 795 428

## Beschreibung

Die Erfindung betrifft eine Pumpe mit einer Anlaufscheibe für eine Welle, gemäß Oberbegriff des Anspruchs 1.

Pumpen mit Anlaufscheiben der hier angesprochenen Art sind bekannt. Bei derartigen Pumpen ist die Welle in einem Gleitlager angeordnet. Neben der radialen Lagerung der Welle in einem Gleitlager ist in der Regel auch eine Axialsicherung in Form einer Anlaufscheibe für die Welle erforderlich. Die Anlaufscheibe, die beispielsweise an einem Ende des Gleitlagers angeordnet ist, verhindert, dass sich die Welle in axialer Richtung beispielsweise gegenüber einem Pumpenflansch verlagert. Es hat sich bei den bekannten Anlaufscheiben gezeigt, dass diese den Leckageölfluss der Pumpe abschnüren. Das sich dadurch an der Anlaufscheibe ansammelnde Leckageöl ruft auf die Welle wirkende Axialkräfte hervor, welche die Funktionsweise der Welle und damit der Pumpe beeinträchtigen.

Es ist daher Aufgabe der Erfindung, eine Pumpe mit einer Anlaufscheibe zu schaffen, die den oben genannten Nachteil nicht aufweist.

Zur Lösung dieser Aufgabe wird eine Pumpe mit einer Anlaufscheibe mit den Merkmalen des Anspruchs 1 vorgeschlagen, wobei sich die Anhanfscheibe durch mindestens eine in ihrem Randbereich vorgesehene Ausnehmung auszeichnet. Durch eine derartige Ausnehmung im Randbereich der Anlaufscheibe wird der Durchflusswiderstand durch die Anlaufscheibe für dort auftretendes Leckageöl der Pumpe reduziert, und das Leckageöl kann durch die Anlaufscheibe entweichen, sodass auf die Welle wirkende Axialkräfte vermindert werden. Durch diese Ausgestaltung ist also gewährleistet, dass auf die Welle wirkende Axialkräfte minimiert werden und somit eine einwandfreie Funktionsweise der Welle und damit einer Pumpe gewährleistet ist.

Besonders bevorzugt wird eine Pumpe mit einer Anlaufscheibe, die sich dadurch auszeichnet, dass mindestens eine Ausnehmung der Anlaufscheibe mit mindestens einer in ein Gleitlager eingebrachten Nut in Fluidverbindung steht. Das Leckageöl der Pumpe kann also nicht nur durch die Ausnehmung in der Anlaufscheibe hindurchtreten, sondern kann weiter durch die Nut in dem Gleitlager fließen.

Außerdem bevorzugt wird eine Pumpe mit einer Anlaufscheibe, welche eine Verdrehsicherungseinrichtung aufweist. Die Verdrehsicherungseinrichtung umfasst dabei vorzugsweise wenigstens einen Zapfen, der mit einer Ausnehmung im Gleitlager zusammenwirkt. Eine derartige Verdrehsicherungseinrichtung verhindert, dass die Anlaufscheibe mit der Welle rotiert und auf diese Weise ein Verschleiß der Anlaufscheibe sowie von an dieser reibenden Bauteilen der Pumpe, wie beispielsweise an einem Pumpenflansch, eintritt. Denkbar ist umgekehrt auch eine Verdrehsicherungseinrichtung, bei der das Gleitlager mindestens einen Zapfen aufweist, der mit Ausnehmungen in der Anlaufscheibe zusammenwirkt.

Weiterhin bevorzugt wird eine Pumpe mit einer Anlaufscheibe, die sich dadurch auszeichnet, dass die mindestens eine Ausnehmung der Anlaufscheibe genau dann mit mindestens einer Nut des Gleitlagers in Verbindung steht, wenn der wenigstens eine Zapfen der Verdrehsicherungseinrichtung so positioniert ist, dass er in die entsprechende Ausnehmung im Gleitlager eingreift. Die Anlaufscheibe ist dabei vorzugsweise an einem ersten Ende des Gleitlagers angeordnet. Somit wirkt die Verdrehsicherungseinrichtung auch als Positionierungseinrichtung für die Anlaufscheibe und das Gleitlager zueinander. Die Anlaufscheibe ist nach der Arretierung der Verdrehsicherungseinrichtung der Anlaufscheibe vorzugsweise in das Gleitlager integriert.

Auch wird eine Pumpe mit einer Anlaufscheibe bevorzugt, die sich dadurch auszeichnet, dass in dem Gleitlager eine Welle gelagert ist und die Welle im Bereich des Gleitlagers einen Wellenbund aufweist. Der Wellenbund weist einen größeren Durchmesser als die Welle in den angrenzenden Bereichen auf und wirkt so mit einer Axialsicherung der Welle, wie sie durch die Anlaufscheibe realisiert wird, zusammen.

Besonders bevorzugt wird eine Pumpe mit einer Anlaufscheibe, die sich dadurch auszeichnet, dass an einem zweiten Ende des Gleitlagers eine Einpressbuchse, im Folgenden EPB genannt, angeordnet ist. Die Welle ist in der EPB angeordnet, wobei ein in der EPB angeordneter Radialwellendichtring durch eine an der Umfangsfläche der Welle anliegende Dichtlippe verhindert, dass Leckageöl aus der Pumpe austritt. Vorzugsweise ist zwischen Gleitlager und EPB außerdem eine Anlagescheibe angeordnet, die als Anlagefläche für den Wellenbund geeignet ist. Die Anlagescheibe dient dabei wie die Anlaufscheibe als Axialsicherung der Welle.

Besonders bevorzugt wird eine Pumpe mit einer Anlaufscheibe, die zusammen mit dem Gleitlager und der EPB in einem Pumpenflansch angeordnet ist. Vorzugsweise sind die Anlaufscheibe, das Gleitlager und die EPB dabei in dem Pumpenflansch verpresst. Dadurch haben die Elemente einen entsprechenden Halt im Pumpenflansch, sodass ein Mitdrehen dieser Elemente während des Betriebs der Pumpe durch die Reibungskräfte der sich drehenden Welle ausgeschlossen ist.

Bevorzugt wird auch eine Pumpe mit einer Anlaufscheibe, die sich dadurch auszeichnet, dass in das Gleitlager mindestens eine Ausnehmung eingebracht ist, die mit einem auch als Entlastungsbohrung realisierbaren Entlastungskanal des Pumpenflansches in Fluidverbindung steht. Durch die Ausnehmung im Gleitlager sowie die Entlastungsbohrung im Pumpenflansch kann Leckageöl, welches beispielsweise über die mindestens eine Ausnehmung in der Anlaufscheibe in das Gleitlager gelangt, entweichen und zurück zur Saugseite der Pumpe oder in einen Tank geführt werden.

Schließlich wird eine Pumpe mit einer Anlaufscheibe bevorzugt, die sich dadurch auszeichnet, dass der Pumpenflansch mindestens eine keilförmige Nut aufweist, die eine Fluidverbindung zwischen einer die Welle aufnehmenden Ausnehmung im Pumpenflansch und der mindestens einen Ausnehmung der Anlaufscheibe schafft. Durch die keilförmige Nut ist gewährleistet, dass Leckageöl zu der Ausnehmung in der Anlaufscheibe gelangt und Axialkräfte, die auf die Welle wirken, reduziert werden.

Die Erfindung wird im Folgenden anhand der Zeichnung näher erläutert. Es zeigen:
- Figur 1: einen Querschnitt durch eine in einem Pumpenflansch angeordnete Anlaufscheibe;
- Figur 2: ein Gleitlager der Länge nach aufgeschnitten und ausgerollt und
- Figur 3: einen Längsschnitt durch einen eine Anlaufscheibe aufweisenden Pumpenflansch gemäß Figur 1.

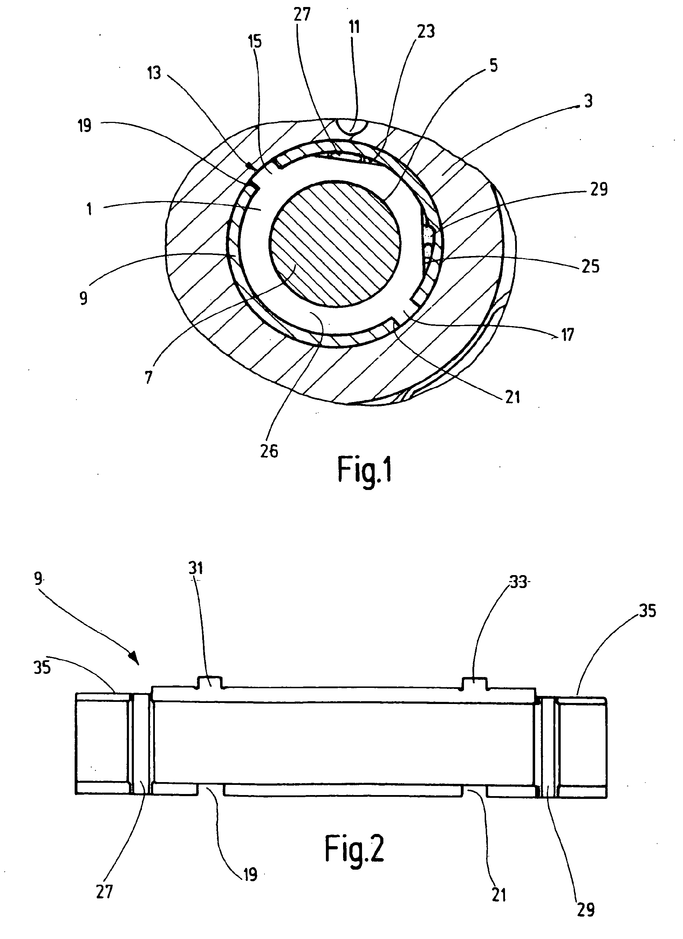

Figur 1 zeigt einen Querschnitt durch eine Anlaufscheibe 1, die in einem Pumpenflansch 3 angeordnet ist. In einer Öffnung 5 der Anlaufscheibe 1 ist eine Welle 7 angeordnet. Außerdem ist in dem Pumpenflansch 3 ein Gleitlager 9 vorgesehen, welches die Anlaufscheibe 1 größtenteils umgibt.

Aus Figur 1 ist außerdem erkennbar, dass eine Entlastungsbohrung 11 vorgesehen ist, die dazu dient, Leckageöl der Pumpe zurück zu einem Tank oder zur Saugseite der Pumpe zu leiten.

Die in Figur 1 dargestellte Anlaufscheibe 1 umfasst eine Verdrehsicherungseinrichtung 13, welche mindestens einen, hier zwei Zapfen 15 und 17 aufweist, die hier von dem Grundkörper der Anlaufscheibe 1 entspringen und vorzugsweise mit diesem in einer Ebene liegen. In der Ausführung gemäß Figur 1 wirken die Zapfen 15 und 17 der Verdrehsicherungseinrichtung 13 mit Ausnehmungen 19 und 21 im Gleitlager 9 zusammen. Durch das Eingreifen der Zapfen 15 und 17 in die entsprechenden Ausnehmungen 19 und 21 wird ein relatives Verdrehen der Anlaufscheibe 1 gegenüber dem Pumpenflansch 3 verhindert. Durch die Verdrehsicherungseinrichtung 13 ist es also ausgeschlossen, dass die Anlaufscheibe 1 aufgrund von Reibungskräften der sich drehenden Welle 7 mitrotiert und es somit zu Schäden am Pumpenflansch 3, der vorzugsweise aus Aluminium hergestellt ist, kommt. Auch ist es denkbar, dass umgekehrt das Gleitlager 9 mindestens einen Zapfen aufweist, der mit einer zugehörigen Ausnehmung in der Anlaufscheibe 1 zusammenwirkt, um eine Verdrehsicherungseinrichtung zu realisieren.

Die Ausnehmungen 19 und 21 an dem Gleitlager 9 und die Zapfen 15 und 17 der Anlaufscheibe 1 werden vorzugsweise durch Stanzprozesse hergestellt. Dies ermöglicht einerseits eine kostengünstige Produktion und andererseits entsteht während des Montageprozesses kein zusätzlicher Aufwand für die Positionierung der Teile zueinander.

Weiterhin dargestellt in Figur 1 sind Ausnehmungen 23 und 25 in einem Randbereich 26 der Anlaufscheibe 1. Die Ausnehmungen 23 und 25 sind hier durch einen senkrecht zu einer Radiallinie, also sekantenartig verlaufenden geraden Schnitt im Randbereich realisiert, jedoch sind auch andere Ausgestaltungen der Ausnehmungen 23 und 25 möglich. Das Gleitlager 9 umfasst auf seiner Innenfläche verlaufende Nuten 27 und 29, die in die Bildebene hinein in dem Gleitlager 9 verlaufen. Sind die Zapfen 15 und 17 der Verdrehsicherungseinrichtung 13 in den zugehörigen Ausnehmungen 19 und 21 des Gleitlagers 9 angeordnet, stehen die Ausnehmungen 23 und 25 der Anlaufscheibe 1 in Fluidverbindung mit den in Figur 1 angedeuteten Nuten 27 und 29 des Gleitlagers 9. Somit wirkt die Verdrehsicherungseinrichtung 13 auch als Positionierungseinrichtung für die Anlaufscheibe 1 und das Gleitlager 9.

Durch diese vorteilhafte Ausgestaltung der Anlaufscheibe 1 kann das Leckageöl einer Pumpe, das sich an der Anlaufscheibe 1 ansammelt, durch die Ausnehmungen 23 und 25 weiter durch die Nuten 27 und 29 des Gleitlagers 9 entweichen, sodass durch das Öl verursachte axiale Kräfte auf die Welle 7 abgebaut oder auch ganz verhindert werden. Die Ausnehmungen 23 und 25 der Anlaufscheibe 1 sind vorzugsweise so ausgestaltet, dass sie die Nuten 27 und 29 flächenmäßig vollständig umschließen. Dadurch ergibt sich ein minimaler Durchflusswiderstand für das an der Anlaufscheibe 1 auftretende Leckageöl, sodass dieses ohne Weiteres abfließen kann. Die vorteilhafte Ausgestaltung der Anlaufscheibe 1 verhindert also, dass der Leckageölfluss der Pumpe behindert oder abgeschnürt wird und die dadurch auf die Welle 7 wirkenden Axialkräfte zu Funktionsstörungen der Pumpe führen.

Die Nuten 27 und 29 im Gleitlager 9 sind vorzugsweise nicht dort ausgebildet, wo die Zugkräfte eines Antriebsriemens auf die Welle 7 wirken, da es an diesen Stellen keine tragfähige durchgehende Oberfläche gibt und es zu einer Querschnittsverengung kommen kann, die den Leckageölfluss durch die Nuten 27 und 29 vermindern könnte.

Figur 2 zeigt ein in Längsrichtung aufgeschnittenes und ausgerolltes Gleitlager 9. Gleiche Teile sind mit gleichen Bezugszeichen versehen, sodass insofern auf die Beschreibung zu Figur 1 verwiesen wird. Deutlich erkennbar in Figur 2 sind die Nuten 27 und 29 des Gleitlagers 9, die mit den Ausnehmungen 23 und 25 der Anlaufscheibe 1 in Fluidverbindung stehen. Auch erkennbar sind die Ausnehmungen 19 und 21, die mit den Zapfen 15 und 17 der Verdrehsicherungseinrichtung 13 der Anlaufscheibe 1 zusammenwirken.

Von der den Ausnehmungen 19 und 21 gegenüberliegenden Seite des Gleitlagers 9 gehen beispielhaft Zapfen 31 und 33 aus, die beispielsweise mit einer weiteren, an einem zweiten Ende des Gleitlagers 9 angeordneten Anlagescheibe in Verbindung stehen können. Eine entsprechende, hier nicht dargestellte Anlagescheibe müsste entsprechende Ausnehmungen aufweisen, die wiederum mit den Zapfen 31 und 33 des Gleitlagers 9 zusammenwirken, um so eine Verdrehsicherungseinrichtung zu realisieren. Die Zapfen 31 und 33 sind hier rein beispielhaft dargestellt und können ebenso entfallen.

Auf der Seite der Zapfen 31 und 33 ist eine Ausnehmung 35 im Gleitlager 9 vorgesehen, die sich in zusammengerolltem Zustand des Gleitlagers 9 in radialer Richtung erstreckt und hier beispielsweise durch einen verkürzten Wandbereich des Gleitlagers 9 realisiert wird. Denkbar ist es auch, die Ausnehmung 35 durch eine Bohrung zu realisieren, die den vom Gleitlager 9 umschlossenen Raum mit der Entlastungsbohrung 11 verbindet. Die Ausnehmung 35 steht, wie hier nicht dargestellt ist, mit der Entlastungsbohrung 11 des Pumpenflansches 3 in Fluidverbindung. Leckageöl, welches durch die Ausnehmungen 23 und 25 in der Anlaufscheibe 1 in die Nuten 27 und 29 des Gleitlagers 9 gelangt, wird also weiter über die Ausnehmung 35 in die Entlastungsbohrung 11 geleitet und von dort aus zurück zu einem Tank oder zur Saugseite der Pumpe.

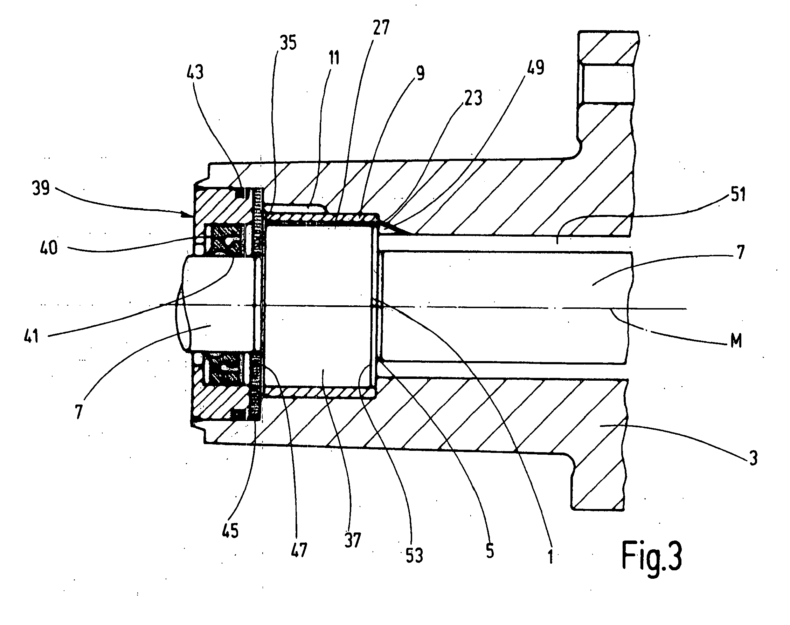

Figur 3 zeigt einen Längsschnitt durch einen eine Anlaufscheibe aufweisenden Pumpenflansch 3 gemäß Figur 1. Gleiche Teile sind mit gleichen Bezugszeichen versehen, so dass insofern auf die vorangegangen Figuren verwiesen wird. In Figur 3 erkennbar ist das Gleitlager 9, welches so ausgestaltet ist, dass es einen Wellenbund 37 der Welle 7 aufnimmt. Mit seinem gegenüber der Welle 7 vergrö-βerten Durchmesser kann der Wellenbund 37 gegen die Anlaufscheibe 1 anlaufen. Dadurch wird verhindert, dass sich die Welle 7 in axialer Richtung verlagert und gegen den Pumpenflansch 3 reibt.

Rechts von dem Gleitlager 9 ist die Anlaufscheibe 1 angeordnet. Wie in Figur 3 nicht erkennbar ist, sind die Anlaufscheibe 1 und das Gleitlager 9 über die Verdrehsicherungseinrichtung 13 der Anlaufscheibe 1 und die entsprechenden Ausnehmungen 19 und 21 im Gleitlager 9 gemäß Figur 1 miteinander gekoppelt. Auch stehen die Ausnehmungen 23 und 25 der Anlaufscheibe 1 mit den Nuten 27 und 29 des Gleitlagers 9 gemäß Figur 1 in Fluidverbindung, was hier ebenfalls nicht erkennbar ist.

Aus Figur 3 ist ersichtlich, dass durch die Arretierung der Anlaufscheibe 1 in dem Gleitlager 9 mittels der Verdrehsicherungseinrichtung 13 die Anlaufscheibe 1 vorteilhaft in das Gleitlager 9 integriert ist. Wie bereits erwähnt wurde, ist diese Ausgestaltung durch Stanzprozesse besonders einfach und kostengünstig realisierbar.

An einem zweiten, von einem Betrachter der Figur 3 aus gesehen linken Ende des Gleitlagers 9 ist eine Einpressbuchse 39 angeordnet, die die Welle 7 aufnimmt. Die Einpressbuchse 39 umfasst einen Radialwellendichtring 40, der eine Dichtlippe 41 aufweist, die an der Oberfläche der Welle 7 anliegt und somit verhindert, dass Leckageöl der Pumpe aus dem Pumpengehäuse austreten kann. Dichtringe der hier angesprochenen Art und ihre Funktion sind bekannt, so dass hier nicht weiter darauf eingegangen wird. Gegenüber dem Pumpenflansch 3 kann die Einpressbuchse 39 mittels eines Dichtelements, vorzugsweise mittels eines O-Rings 43 abgedichtet werden.

Bei der in Figur 3 dargestellten Anordnung ist die Anlaufscheibe 1 in das Gleitlager 9 integriert, welches zusammen mit einer Einpressbuchse 39 in einem Pumpenflansch 3 angeordnet ist. Vorzugsweise sind die in den Pumpenflansch 3 eingebrachten Teile über die Einpressbuchse 39 verpresst und werden gegebenenfalls durch einen umgebördelten Rand des Pumpenflansches 3 gehalten. Durch die hohe Einpresskraft der Einpressbuchse 39 ist gewährleistet, dass sich das Gleitlager 9 trotz der Reibungskräfte der rotierenden Welle 7 nicht im Pumpenflansch 3 mitdreht. Dadurch werden Beschädigungen an dem Pumpenflansch 3, der vorzugsweise aus Aluminium hergestellt ist, vermieden.

In der in Figur 3 dargestellten Anordnung ist zwischen Gleitlager 9 und Einpressbuchse 39 eine Anlagescheibe 45 vorgesehen. Diese weist vorzugsweise eine Anlagefläche 47 auf, gegen welche der Wellenbund 37 anlaufen kann. Die Anlagescheibe 45 dient also bei der Anordnung gemäß Figur 3, ebenso wie die Anlaufscheibe 1, als Axialsicherung.

Auf Seiten der Anlaufscheibe 1 läuft der Wellenbund 37 in einem Bereich 53 gegen die Anlaufscheibe 1 an. Im Falle einer Drehbewegung der Welle 7 können hier Reibungskräfte auftreten, die eine Drehbewegung der Anlaufscheibe 1 gegenüber dem Pumpenflansch 3 verursachen könnten. Durch die Verdrehsicherungseinrichtung 13 wird dies jedoch vermieden.

In Figur 3 ist die Ausnehmung 35 des Gleitlagers 9 dargestellt, die mit der Entlastungsbohrung 11 in Verbindung steht. Auch ist die Nut 27 angedeutet, die über die Ausnehmung 35 mit der Entlastungsbohrung 11 in Verbindung steht.

Auf der Innenfläche des Pumpenflansches 3 ist mindestens eine keilförmige Nut 49 vorgesehen, über die Leckageöl aus einem die Welle 7 aufnehmenden Bereich 51 des Pumpenflansches 3 zu der hier nur angedeuteten Ausnehmung 23 der Anlaufscheibe 1 gelangt und von dort aus über die Nut 27, die Ausnehmung 35 und die Entlastungsbohrung 11 zurück zu einem Tank oder zur Saugseite der Pumpe. Durch die oben beschriebene Ausgestaltung wird also ein Kreislauf realisiert, der es ermöglicht, Leckageöl durch die vorteilhafte Ausgestaltung der Anlaufscheibe 1 beispielsweise zurück zur Saugseite der Pumpe zu leiten, ohne dass die Anlaufscheibe 1 den Ölfluss behindert oder blockiert und dadurch Drücke und somit Axialkräfte auf die Welle 7 wirken, welche die Funktionsweise der Pumpe beeinträchtigen können.

Bei einer in Betrieb befindlichen, hier nicht dargestellten Pumpe, dreht sich die Welle 7 um eine Mittelachse M und überträgt dadurch Reibungskräfte über die Anlauffläche 53 auf die Anlaufscheibe 1. Durch die in Figur 3 nicht dargestellte Verdrehsicherungseinrichtung 13 kann sich die Anlaufscheibe 1 nicht relativ gegenüber dem Gleitlager 9 drehen. Dadurch, dass das Gleitlager 9 in dem Pumpenflansch 3 verpresst ist, wird auch das Gleitlager 9 an einem Mitdrehen gehindert.

Durch den Bereich 51 des Pumpenflansches 3 gelangt Leckageöl der Pumpe in den Bereich der Anlaufscheibe 1. Das Leckageöl verursacht Drücke und damit axiale Kräfte, die auf die Welle 7 wirken. Über die keilförmige Nut 49 im Pumpenflansch 3 kann dieses Leckageöl durch die Ausnehmung 23 der Anlaufscheibe 1 und weiter durch die Nut 27 und die Ausnehmung 35 des Gleitlagers 9 über die Entlastungsbohrung 11 zurück zur Saugseite der Pumpe oder in einen Tank geleitet werden, ohne dass die Welle in axialer Richtung von dem Leckageöl mit unzulässig hohen Kräften beaufschlagt wird. Für jede in die Anlaufscheibe 1 eingebrachte Ausnehmung 23,25 ist vorzugsweise eine keilförmige Nut 49 im Pumpenflansch 3 vorgesehen.

Die vorteilhafte Ausgestaltung einer hier vorgeschlagenen Pumpe mit einer Anlaufscheibe 1 bewirkt also einen minimierten Durchlasswiderstand für Leckageöl der Pumpe und ermöglicht es damit, die durch das Leckageöl der Pumpe verursachten, auf die Welle 7 wirkenden Axialkräfte zu reduzieren. Die Ausnehmungen 23 und 25 der Anlaufscheibe 1 können dabei beliebig geformt sein, vorzugsweise sind diese jedoch auf die in das Gleitlager eingebrachten Nuten 27 und 29 abgestimmt, so dass Leckageöl aus den Nuten 27,29 ohne nennenswerten Widerstand durch die Ausnehmung 23,25 hindurchtreten kann. Die mindestens eine keilförmige Nut 49 im Pumpenflansch 3 ermöglicht außerdem die Zuleitung des Leckageöls aus einem Bereich 51 zu den Ausnehmungen 23 und 25 der Anlaufscheibe 1.

Durch die integrierte Verdrehsicherungseinrichtung 13 der Anlaufscheibe 1 ist gewährleistet, dass diese sich nicht relativ zu dem Pumpenflansch 3 verdreht und somit Beschädigungen an dem Pumpenflansch 3, der vorzugsweise aus Aluminium besteht, vermieden werden. Die Nuten 27 und 29 im Gleitlager 9 sind vorzugsweise nicht dort ausgebildet, wo die Zugkräfte des Antriebsriemens auf die Welle 7 wirken, da es an diesen Stellen zu keiner tragfähigen Oberfläche und gegebenenfalls zu einer Querschnittsverengung kommen kann, die den Leckageölfluss durch die Nuten 27 und 29 vermindern könnte.

### Bezugszeichenliste

- 1: Anlaufscheibe
- 3: Pumpenflansch
- 5: Öffnung
- 7: Welle
- 9: Gleitlager
- 11: Entlastungsbohrung
- 13: Verdrehsicherungseinrichtung
- 15: Zapfen (Anlaufscheibe)
- 17: Zapfen (Anlaufscheibe)
- 19: Ausnehmung (Gleitlager)
- 21: Ausnehmung (Gleitlager)
- 23: Ausnehmung (Anlaufscheibe)
- 25: Ausnehmung (Anlaufscheibe)
- 26: Randbereich
- 27: Nut
- 29: Nut
- 31: Zapfen (Gleitlager)
- 33: Zapfen (Gleitlager)
- 35: Ausnehmung (Gleitlager)
- 37: Wellenbund
- 39: Einpressbuchse
- 40: Radialwellendichtring
- 41: Dichtlippe
- 43: Dichtelement
- 45: Anlagescheibe
- 47: Anlagefläche
- 49: Keilförmige Nut
- 51: Bereich
- 53: Bereich
- M: Mittelachse

## Patentansprüche

1. Pumpe, mit einer Welle (7), einem Gleitlager (9) zur Lagerung der Welle (7) und einer Anlaufscheibe (1) für die Welle (7), **dadurch gekennzeichnet, dass** die Anlaufscheibe (1) mindestens eine in ihrem Randbereich (26) vorgesehene Ausnehmung (23,25) aufweist, und dass die mindestens eine Ausnehmung (23,25) der Anlaufscheibe (1) mit mindestens einer in das Gleitlager (9) eingebrachten Nut (27,29) in Fluidverbindung steht.

2. Pumpe nach Anspruch 1, **dadurch gekennzeichnet, dass** die Anlaufscheibe (1) eine Verdrehsicherungseinrichtung (13) umfasst.

3. Pumpe nach Anspruch 2, **dadurch gekennzeichnet, dass** die Verdrehsicherungseinrichtung (13) wenigstens einen von der Anlaufscheibe (1) und/oder von dem Gleitlager (9) entspringenden Zapfen (15,17) umfasst, der mit wenigstens einer Ausnehmung (19,21) im Gleitlager (9) oder in der Anlaufscheibe (1) zusammenwirkt.

4. Pumpe nach Anspruch 3, **dadurch gekennzeichnet, dass** die mindestens eine Ausnehmung (23,25) der Anlaufscheibe (1) mit der mindestens einen Nut (27,29) des Gleitlagers (9) in Fluidverbindung steht, wenn der wenigstens eine Zapfen (15,17) so positioniert ist, dass er in die wenigstens eine Ausnehmung (19,21) im Gleitlager (9) eingreift.

5. Pumpe nach einem der Ansprüche 1 bis 4, **dadurch gekennzeichnet, dass** die Anlaufscheibe (1) an einem ersten Ende des Gleitlagers (9) angeordnet ist.

6. Pumpe nach einem der Ansprüche 1 bis 5, **dadurch gekennzeichnet, dass** die Anlaufscheibe (1) in das Gleitlager (9) integriert ist.

7. Pumpe nach einem der Ansprüche 1 bis 5, **dadurch gekennzeichnet, dass** in dem Gleitlager (9) eine Welle (7) angeordnet ist und die Welle (7) in dem Gleitlager (9) einen Wellenbund (37) aufweist.

8. Pumpe nach einem der Ansprüche 5 bis 7, **dadurch gekennzeichnet, dass** an einem zweiten Ende des Gleitlagers (9) eine Einpressbuchse (39) angeordnet ist.

9. Pumpe nach Anspruch 8, **dadurch gekennzeichnet, dass** zwischen Gleitlager (9) und Einpressbuchse (39) eine Anlagescheibe (45) angeordnet ist.

10. Pumpe nach Anspruch 9, **dadurch gekennzeichnet, dass** die Anlagescheibe (45) eine Anlagefläche (47) für den Wellenbund (37) aufweist.

11. Pumpe nach einem der Ansprüche 7 bis 10, **dadurch gekennzeichnet, dass** die Anlaufscheibe (1), das Gleitlager (9) und die Einpressbuchse (39) in einem Pumpenflansch (3) angeordnet sind.

12. Pumpe nach Anspruch 11, **dadurch gekennzeichnet, dass** die Anlaufscheibe (1) mit dem Gleitlager (9) und der Einpressbuchse (39) in dem Pumpenflansch (3) verpresst sind.

13. Pumpe nach einem der Ansprüche 1 bis 12, **dadurch gekennzeichnet, dass** in das Gleitlager (9) mindestens eine Ausnehmung (35) eingebracht ist, die in Fluidverbindung mit einer Entlastungsbohrung (11) des Pumpenflansches (3) steht.

14. Pumpe nach einem der Ansprüche 10 bis 13, **dadurch gekennzeichnet, dass** der Pumpenflansch (3) mindestens eine keilförmige Nut (49) aufweist, die eine Fluidverbindung zwischen einem die Welle (7) aufnehmenden Bereich (51) im Pumpenflansch (3) und der mindestens einen Ausnehmung (23,25) der Anlaufscheibe (1) schafft.

## Claims

1. Pump having a shaft (7), a sliding bearing (9) for supporting the shaft (7) and a thrust washer (1) for the shaft (7), **characterised in that** the thrust washer (1) has at least one recess (23, 25) provided in its edge region (26), and that the at least one recess (23, 25) of the thrust washer (1) is in fluid connection with at least one groove (27, 29) formed into the sliding bearing (9).

2. Pump according to claim 1, **characterised in that** the thrust washer (1) comprises an anti-rotation protection device (13).

3. Pump according to claim 2, **characterised in that** the anti-rotation protection device (13) comprises at least one pin (15, 17) projecting from the thrust washer (1) and/or from the sliding bearing (9), the pin interacting with at least one recess (19, 21) in the sliding bearing (9) or in the thrust washer (1).

4. Pump according to claim 3, **characterised in that** the at least one recess (23, 25) of the thrust washer (1) is in fluid connection with the at least one groove (27, 29) of the sliding bearing (9) when the at least one pin (15, 17) is positioned in such a way that it engages with the at least one recess (19, 21) in the sliding bearing (9).

5. Pump according to any one of claims 1 to 4, **characterised in that** the thrust washer (1) is arranged on a first end of the sliding bearing (9).

6. Pump according to any one of claims 1 to 5, **characterised in that** the thrust washer (1) is integrated into the sliding bearing (9).

7. Pump according to any one of claims 1 to 5, **characterised in that** a shaft (7) is arranged in the sliding bearing (9), and the shaft (7) has a shaft collar (37) in the sliding bearing (9).

8. Pump according to any one of claims 5 to 7, **characterised in that** a press-fit bushing (39) is arranged on a second end of the sliding bearing (9).

9. Pump according to claim 8, **characterised in that** a stopper disc (45) is arranged between the sliding bearing (9) and the press-fit bushing (39).

10. Pump according to claim 9, **characterised in that** the stopper disc (45) has a contact surface (47) for the shaft collar (37).

11. Pump according to any one of claims 7 to 10, **characterised in that** the thrust washer (1), the sliding bearing (9) and the press-fit bushing (39) are arranged in a pump flange (3).

12. Pump according to claim 11, **characterised in that** the thrust washer (1) is press-fitted into the pump flange (3) with the sliding bearing (9) and the press-fit bushing (39).

13. Pump according to any one of claims 1 to 12, **characterised in that** at least one recess (35) is formed into the sliding bearing (9), the recess being in fluid connection with a relief bore (11) of the pump flange (3).

14. Pump according to any one of claims 10 to 13, **characterised in that** the pump flange (3) has at least one wedge-shaped groove (49) which provides a fluid connection between a region (51) in the pump flange (3) receiving the shaft (7) and the at least one recess (23, 25) of the thrust washer (1).

## Revendications

1. Pompe comportant un arbre (7), un palier lisse (9) destiné au logement dudit arbre (7) ainsi qu'un disque de démarrage (1) pour l'arbre (7), **caractérisée en ce que** ledit disque de démarrage (1) présente au moins un évidement (23, 25) prévu dans sa zone périphérique (26) et **en ce que** ledit au moins un évidement (23, 25) du disque de démarrage (1) se trouve en liaison fluidique avec au moins une rainure (27, 29) aménagée dans le palier lisse (9).

2. Pompe selon la revendication 1, **caractérisée en ce que** le disque de démarrage (1) comprend un dispositif anti-rotation (13).

3. Pompe selon la revendication 2, **caractérisée en ce que** le dispositif anti-rotation (13) comprend au moins un tourillon (15, 17) sortant du disque de démarrage (1) et/ou du palier lisse (9) et coopérant avec au moins un évidement (19, 21) dans le palier lisse (9) ou dans le disque de démarrage (1).

4. Pompe selon la revendication 3, **caractérisée en ce que** le au moins un évidement (23, 25) du disque de démarrage (1) se trouve en liaison fluidique avec la au moins une rainure (27, 29) du palier lisse (9) lorsque le au moins un tourillon (15, 17) est positionné de manière à engrener dans le au moins un évidement (19, 21) dans le palier lisse (9).

5. Pompe selon l'une quelconque des revendications 1 à 4, **caractérisée en ce que** le disque de démarrage (1) est disposé au niveau d'une première extrémité du palier lisse (9).

6. Pompe selon l'une quelconque des revendications 1 à 5, **caractérisée en ce que** le disque de démarrage (1) est intégré dans le palier lisse (9).

7. Pompe selon l'une quelconque des revendications 1 à 5, **caractérisée en ce qu'**un arbre (7) est disposé dans le palier lisse (9), ledit arbre (7) présentant un collet d'arbre (37) dans le palier lisse (9).

8. Pompe selon l'une quelconque des revendications 5 à 7, **caractérisée en ce qu'**une bague enfoncée (39) est disposée au niveau d'une seconde extrémité du palier lisse (9).

9. Pompe selon la revendication 8, **caractérisée en ce qu'**une plaque d'appui (45) est disposée entre le palier lisse (9) et la bague enfoncée (39).

10. Pompe selon la revendication 9, **caractérisée en ce que** la plaque d'appui (45) présente une surface d'appui (47) pour le collet d'arbre (37).

11. Pompe selon l'une quelconque des revendications 7 à 10, **caractérisée en ce que** le disque de démarrage (1), le palier lisse (9) et la bague enfoncée (39) sont disposés dans une bride de pompe (3).

12. Pompe selon la revendication 11, **caractérisée en ce que** ledit disque de démarrage (1) est enfoncé dans la bride de pompe (3) avec le palier lisse (9) et la bague enfoncée (39).

13. Pompe selon l'une quelconque des revendications 1 à 12, **caractérisée en ce qu'**au moins un évidement (35) est aménagé dans le palier lisse (9), ledit évidement se trouvant en liaison fluidique avec un alésage de décharge (11) de la bride de pompe (3).

14. Pompe selon l'une quelconque des revendications 10 à 13, **caractérisée en ce que** la bride de pompe (3) présente au moins une rainure cunéiforme (49) qui crée une liaison fluidique entre une zone (51) recevant l'arbre (7) dans la bride de pompe (3) et le au moins un évidement (23, 25) du disque de démarrage (1).
